# EUROPÄISCHE PATENTSCHRIFT

(11) **EP 0 956 220 B1**
(45) Veröffentlichungstag und Bekanntmachung des Hinweises auf die Patenterteilung: **01.08.2001**
(21) Anmeldenummer: 98907868.8
(22) Anmeldetag: 27.01.1998
(51) Int. Cl.: B60R 16/02

(54) **SCHALTERANORDNUNG FÜR ELEKTRISCHE STEUERGERÄTE**
SWITCH ARRANGEMENT FOR ELECTRIC CONTROL UNIT
AGENCEMENT DE COMMUTATEURS POUR APPAREILS DE COMMANDE ELECTRIQUES

(30) Priorität: 29.01.1997 DE 19703236
(43) Veröffentlichungstag der Anmeldung: 17.11.1999
(73) Patentinhaber: Infineon Technologies AG, 81669 München (DE)
(72) Erfinder: XU, Chihao, D-81249 München (DE)
(74) Vertreter: Zedlitz, Peter, Dipl.-Inf.
(86) Internationale Anmeldenummer: DE9800243
(87) Internationale Veröffentlichungsnummer: WO9833680

(56) Entgegenhaltungen:
- EP-A- 0 128 574
- EP-A- 0 193 485
- DE-A- 19 518 522
- GB-A- 2 277 618
- WOLFF H W: "HALBLEITERKONZEPTE FUER DIE AUTOMOBILELEKTRONIK" RADIO FERNSEHEN ELEKTRONIK, Bd. 41, Nr. 12, 1.Dezember 1992, Seiten 838-841, XP000368025

## Beschreibung

Die vorliegende Erfindung betrifft eine Schalteranordnung für elektrische Steuergeräte, welche insbesondere zum Einsatz in Bordnetz-Steuergeräten von Kraftfahrzeugen vorgesehen ist.

Die Anzahl elektrischer Komponenten, wie z.B. Elektromotoren, Aggregate usw., und elektronischer Komponenten, wie z.B. Aktuatoren, Sensoren usw., nimmt bei modernen Kraftfahrzeugen stetig zu. Derartige Komponenten erhöhen den Umfang und die Komplexität des Bordnetzes derart drastisch, daß die früher übliche Einzelverdrahtung der Verbraucher über einen Kabelbaum immer größere Probleme bereitet und einen kaum mehr bewerkstelligbaren Aufwand bereitet.

Daher ist man in letzter Zeit dazu übergegangen, die Verbraucher über digitale, computerisierte Systeme anzusteuern, bei denen eine Vielzahl von Leitungen, d.h. der Kabelbaum, durch einen Bus ersetzt ist, an dem Steuerschaltungen der jeweiligen Verbraucher hängen.

Neben dem Busanschluß benötigen die Verbraucher bei derartigen Systemen prinzipiell nur noch einen schaltbaren Stromversorgungsanschluß. Das Schalten der Stromversorgung der Verbraucher wird üblicherweise mit Leistungshalbleitern, wie Transistoren und Thyristoren, durchgeführt und stellt bei diesen digitalen, computerisierten Systemen eine große Herausforderung dar.

Die damit verbundenen Probleme hinsichtlich thermischer und elektrischer Verluste werden dabei um so größer, je höher der zu schaltende Strom ist. In modernen Kraftfahrzeugen gibt es eine Vielzahl von Hochstrom-Verbrauchern, wie z.B. Lüfter, Heckscheibenheizung, Anlasser, Katalysator-Heizung, etc..

Die zum Schalten der Verbraucher verwendeten Schalter sollen dabei nicht nur die übliche Ein-/Aus-Funktion aufweisen, sondern auch eine gewisse künstliche Intelligenz besitzen, d.h. in der Lage sein, Kurzschlüsse, Unterbrechungen, elektrische oder thermische Überlastungen, etc. zu erkennen und geeignete Diagnosefunktionen durchzuführen, so daß ein wirksamer Schutz vor Überlastung möglich ist. Durch Übermitteln derartiger Statusinformationen an die Systemsteuerung lassen sich Fehlerzustände erkennen und können entsprechende Gegenmaßnahmen eingeleitet werden, um die Verbraucher, die Batterie und die Schalter selbst vor einer Beschädigung zu schützen.

Die heutzutage verwendeten Schalter unterteilt man je nach gegenseitiger Anordnung von Verbraucher und Spannungsversorgung in Highside- und Lowside-Schalter. Die für sie verwendeten Bauelemente sind in der Regel MOS-Transistoren mit in einem gemeinsamen Substrat integrierten Leistungs- und Logikelementen.

Ohne Beschränkung der Allgemeinheit werden im folgenden intelligente Highside-MOS-Schalter zur Beschreibung herangezogen.

Für Hochstrom-Verbraucher müssen die Schalter sehr niederohmig sein, um die Wärmeentwicklung in Grenzen zu halten. Deshalb ist die Benutzung vertikaler N-Kanal-MOSFETs zweckmäßig. Im montierten Zustand ist im allgemeinen der Drain-Anschluß dieser Bauteile mit dem Chipträger, auch Leadframe genannt, verbunden, welcher wiederum mit dem positiven Pol der Spannungsversorgung verbunden ist.

Eine Möglichkeit, derartige Highside-MOS-Schalter anzuordnen, besteht darin, einen zentralen Schalter für die Stromversorgung vorzusehen und daran in Reihe anschließend jeweilige Schalter für entsprechende Hochstrom- bzw. Niederstrom-Verbraucher einzufügen.

Ein derartiger zentraler Schalter bringt insofern Nachteile mit sich, dass als die Kosten und der Reiheinwiederstand und damit verbunden die Verlustleistung hoch sind. Abgesehen davon ist die Schwelle für eine Kurzschlusserkennung bei einem zentralen Schalter sehr groß, denn es ist nicht möglich, einen "weichen", d.h. hochohmigen, Kurzschluß von der Aktivierung mehrerer mormaler Verbraucher zu unterscheiden.

Aus der DE 24 09 660 A1 ist eine gattungsgemäße Schalt-, Steuer- und/oder Regeleinrichtung für elektrische Gräte in einem Kraftfahrzeug mit einem Gehäuse für steckbare Schaltelemente, insbesondere Relais, bekannt, die nebeneinander angeordnet sind und die Ausgangssteckkontakte aufweisen. An Verteilungs- bzw. Sammelleitern, die als Schiene ausgeführt sein können, dienen zur Stromversorgung der Schaltkontakte der Relais. Dabei ist jedem Relais eine Sicherung zugeordnet, die zusammen als steckbares Schaltelement ausgeführt sind.

Die Aufgabe der vorliegenden Erfindung besteht somit darin, dass eine Schalteranordnung für den Einsatz in Bordnetz-Steuergeräten von Kraftfahrzeugen vorgesehen ist, zu schaffen, welche eine gute wirksame Wärmeabfuhr ermöglicht und kostengünstig realisierbar ist. Insbesondere soll ein zuverlässige Möglichkeit ohne den Einsatz von separaten Sicherungen geschaffen werden, den Stromfluß bei Überstrom zu begrenzen.

Schalteranordnung für den Einsatz in Bordnetz-Steuergeräten von Kraftfahrzeugen mit folgenden Merkmalen:
- Einer Leiterschiene, welche mit einem ersten vorbestimmten Versorgungspotential einer Batterie des Kraftfahrzeugs verbunden ist,
- einer Mehrzahl von Schalteinrichtungen zum Ein- und Ausschalten mindestens eines zur jeweiligen Schaltereinrichtung zugehörigen Stromverbrauchers,
- jeweils ein erster Stromleitungsanschluß der Schaltereinrichtung ist mit der Leiterschiene verbunden,
- jeweils ein zweiter Stromleitungsanschluß der Schaltereinrichtung ist über den zugehörigen Stromverbraucher mit einem zweiten vorbestimmten Stromversorgungspotential der Batterie verbunden,
- die Schaltereinrichtung ist direkt mit der Leiterschiene verbunden,
- die Schaltereinrichtungen sind Leistungs-MOSFETs sowie diese ansteuernde Steuerschaltungen, die einerseits auf ein Schaltsteuersignal einer zentralen Steuereinheit ansprechen und andererseits ein Stromfluß anhängiges Statussignal

Gemäß einer weiteren bevorzugten Weiterbildung ist einer Schaltereinrichtung ein einziger Stromverbraucher zugeordnet, wenn dessen Stromlast einen vorbestimmten Wert überschreitet. Typische Werte für solch einen vorbestimmten Wert liegen bei bis zu einigen hundert Ampere.

Gemäß einer weiteren bevorzugten Weiterbildung sind einer Schaltereinrichtung mehrere parallel geschaltete Stromversorger zugeordnet, wenn deren Stromlast einen vorbestimmten typischen Wert für solch einen vorbestimmten Wert liegen unter etwa zehn Ampere.

Gemäß einer weiteren bevorzugten Weiterbildung ist einen Multiplexier-/Demultiplexier-Einrichtung zur Verbindung der Steuerschaltungen der Schaltereinrichtungen mit einer zentralen Steuereinheit vorgesehen. Die ermöglicht, dass die Schaltsteuersignale und Statussignale multiplexiert, über eine einzige Busleitung übertragen und an der Schalteranordnung demultiplexiert werden, was die Anzahl von Kabeln insbesondere dann reduziert, wenn die zentrale Steuereinheit abgelegen von der Schalteranordnung vorgesehen ist. Letzteres trifft beispielsweise dann zu, wenn mindestens zwei Schalteranordnungen an zwei verschiedenen Orten im Kraftfahrzeug, z.B. eine im Kofferraum und eine im Motorraum, sowie eine zentrale Steuereinheit im Fahrerraum vorgesehen sind.

Gemäß einer weiteren bevorzugten Weiterbildung sind die Leiterschiene mit bestimmter Wärmeleitfähigkeit und Wärmekapazität und die Schaltereinrichtungen in einem gemeinsamen Schaltgerätgehäuse enthalten. Zweckmäßigerweise sind auch die Steuerschaltungen und die Multiplexier-/ Demultiplexier-Einrichtung in dem gemeinsamen Schaltgerätgehäuse enthalten, falls vorhanden.

Gemäß einer weiteren bevorzugten Weiterbildung ist die Leiterschiene mit bestimmter Wärmeleitfähigkeit und Wärmekapazität direkt an einem Batteriepol angebracht. Die Batteriepole bieten vorteilhafterweise eine hohe mechanische Stabilität zum Anschluß der Leiterschiene sowie eine hohe Wärmekapazität.

Gemäß einer weiteren bevorzugten Weiterbildung ist die Leiterschiene mit bestimmter Wärmeleitfähigkeit und Wärmekapazität eine Metallschiene. zusätzliche Kühleinrichtungen können jedoch bedarfsweise hinzugefügt werden, insbesondere Lüfter.

Nachstehend wird die vorliegende Erfindung anhand bevorzugter Ausführungsformen mit Bezug auf die begleitenden Zeichnungen näher erläutert.

In den Figuren zeigen:
- Fig. 1: einen Schaltplan einer ersten bevorzugten Ausführungsform der vorliegenden Erfindung; und
- Fig. 2: einen Schaltplan einer zweiten bevorzugten Ausführungsform der vorliegenden Erfindung.

In den Figuren bezeichnen gleiche Bezugszeichen gleiche oder funktionsgleiche Bestandteile.

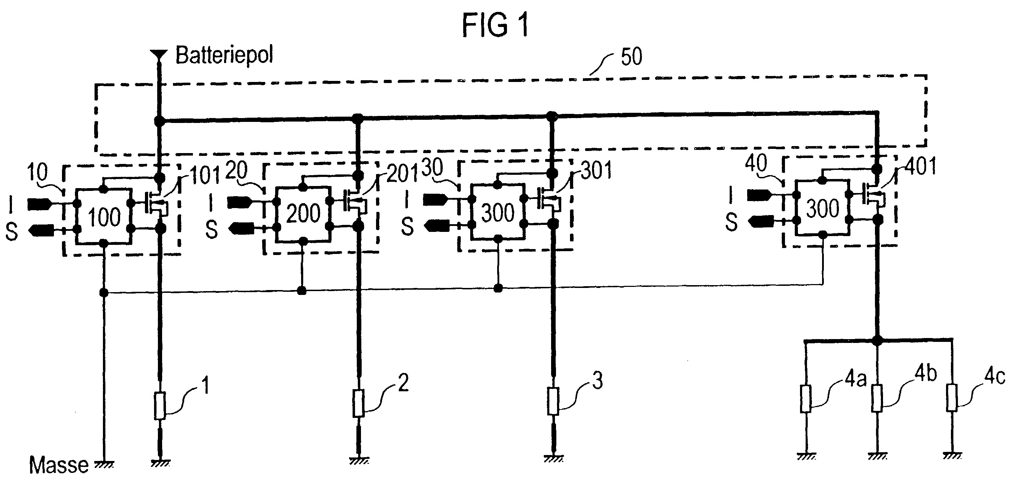

Fig. 1 zeigt einen Schaltplan einer ersten bevorzugten Ausführungsform der vorliegenden Erfindung.

In Fig. 1 bezeichnen Bezugszeichen 1, 2 und 3 jeweils einen Hochstrom-Verbraucher, d.h. einen Stromverbraucher, dessen Stromlast über einem vorbestimmten Wert von typischerweise einigen Ampere liegt.

Die Hochstrom-Verbraucher 1, 2 und 3 sind einerseits mit Massepotential, d.h. dem negativen Batterieanschluß, und andererseits über eine zugehörige Highside-Schaltereinrichtung 10, 20 bzw. 30, mit dem positiven Batterieanschluß verbunden. Die Schaltereinrichtungen 10, 20 und 30 hängen mit ihrem einen Stromleitungsanschluß alle an einer Metallschiene 50 geeigneter Dicke und Länge.

In Fig. 1 bezeichnen Bezugszeichen 4a, 4b und 4c jeweils einen Niederstrom-Verbraucher, d.h. Stromverbraucher, deren Stromlast unter einem vorbestimmten Wert von typischerweise unter einem Ampere liegt.

Die Niederstrom-Verbraucher 4a, 4b und 4c sind einerseits mit Massepotential, d.h. dem negativen Batterieanschluß, und andererseits über eine allen dreien zugehörige Highside-Schaltereinrichtung 40 mit dem positiven Batterieanschluß verbunden. Die Schaltereinrichtungen 40 hängt mit ihrem einen Stromleitungsanschluß ebenfalls an der Metallschiene 50.

Die Schaltereinrichtungen 10, 20, 30 und 40 bestehen aus einem jeweiligen vertikalen N-Kanal-MOSFET 101, 201, 301 bzw. 401 und Steuerschaltung 100, 200, 300 bzw. 400, die zweckmäßigerweise im gleichen Substrat vorgesehen sind.

Die Steuerschaltungen 100, 200, 300 bzw. 400 dienen zum Ein-/ und Ausschalten des zugehörigen vertikalen N-Kanal-MOSFET 101, 201, 301 bzw. 401 ansprechend auf ein jeweiliges Schaltsteuersignal I und zum Erfassen des Stromflusses durch den zugehörigen vertikalen N-Kanal-MOSFET 101, 201, 301 bzw. 401 und Ausgeben eines Statussignals S.

Die Schaltsteuersignale I kommen von einer (nicht gezeigten) zentralen Steuereinheit, an die auch die Statussignale S geleitet werden, welche eine Kommunikation mit den Verbrauchern und sogar eine Kommunikation der Verbraucher untereinander vorsehen kann. Wenn eine kritische Last wie z.B. die elektrische Bremese aktiviert wird, kann eine weniger kritische Last, wie z.B. die Katalysator-Heizung, für diese Zeit abgeschaltet werden. Das Bordnetz, also die Bordspannung, bleibt hierdurch stabil und bricht nicht wegen zu hoher Belastung zusammen.

Die Schaltereinrichtungen 10, 20, 30 und 40 sind alle parallel geschaltet und ermöglichen, daß jeder Hochstrom-Verbraucher 1, 2 und 3 bzw. die Gruppe von Niederstrom-Verbrauchern 4a, 4b und 4c, welche zusammen als ein Hochstrom-Verbraucher anzusehen ist, individuell direkt mit dem positiven Batterieanschluß verbindbar ist.

Das Design der jeweiligen Schaltereinrichtung 10, 20, 30 und 40 ist entsprechend dem oder den zugehörigen Stromverbraucher(n) anpaßbar, ebenso die Kurzschlußschwelle, d.h. die Größe des Stromes, bei der das Statussignal S der zentralen Steuereinheit einen Kurzschluß des betreffenden Stromverbrauchers übermittelt und den Strom durch den Schalter begrenzt wird.

Der besondere Vorteil dieser ersten Ausführungsform besteht nun darin, daß die Drain-Anschlüsse der Schaltereinrichtungen 10, 20, 30 und 40 nur mit der Metallschiene 50, also einem einzigen Metallteil mit geeigneten mechanischen und thermischen Eigenschaften, mit dem positiven Batterie- bzw. Stromversorgungsanschluß verbindbar sind. Zweckmäßigerweise ist die Metallschiene 50 dabei direkt mit dem positiven Batterie- bzw. Stromversorgungsanschluß verbindbar.

Besonders bevorzugt ist, daß die Schaltereinrichtungen 10, 20, 30 und 40 und die Metallschiene 50 den Kern des Gehäuses für das Bordnetz-Steuergerät eines Kraftfahrzeuges bilden.

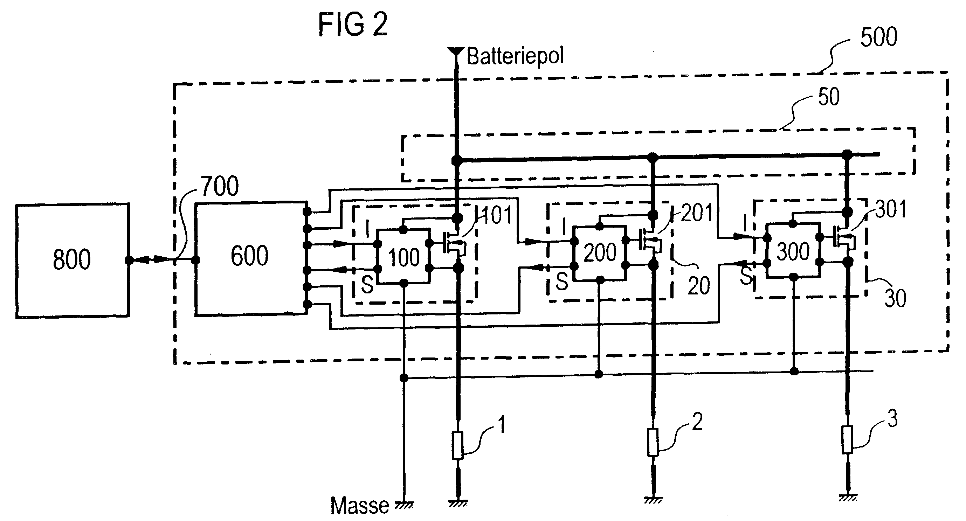

Fig. 2 zeigt einen Schaltplan einer zweiten bevorzugten Ausführungsform der vorliegenden Erfindung.

In Fig. 2 bezeichnen Bezugszeichen 1, 2 und 3 jeweils einen Hochstrom-Verbraucher, d.h. einen Stromverbraucher, dessen Stromlast über einem vorbestimmten Wert von typischerweise einigen Ampere liegt.

Die Hochstrom-Verbraucher 1, 2 und 3 sind einerseits mit Massepotential, d.h. dem negativen Batterieanschluß, und andererseits über eine zugehörige Highside-Schaltereinrichtung 10, 20 bzw. 30, mit dem positiven Batterieanschluß verbunden. Die Schaltereinrichtungen 10, 20 und 30 hängen mit ihrem einen Stromleitungsanschluß alle an einer Metallschiene 50 geeigneter Dicke und Länge.

Der Aufbau und die Funktion der Schaltereinrichtungen 10, 20 bzw. 30 entsprechen denjenigen, welche mit Bezug auf Fig. 1 erläutert wurden.

Eine Multiplexier-/Demultiplexier-Einrichtung 600 ist zur Verbindung der Steuerschaltungen 100, 200 bzw. 300 der Schaltereinrichtungen 10, 20 bzw. 30 mit einer zentralen Steuereinheit 800 vorgesehen.

Die Schaltereinrichtungen 10, 20 und 30, die Metallschiene 50 und die Multiplexier-/Demultiplexier-Einrichtung 600 sind allesamt in einem gemeinsamen Schaltergerätgehäuse 500 untergebracht, welches geeignete Durchführungen für die benötigten Verbindungen aufweist.

Die zentrale Steuereinheit 800 ist in der Regel abgelegen vom Bordnetz-Steuergerät plaziert. Somit würden die verschiedenen Schaltereinrichtungen 10, 20 und 30 eine Vielzahl von Kabeln für die Schaltsteuersignale I und die Statussignale S zur Verbindung mit der zentralen Steuereinheit 800 erfordern. Dies würde den Aufwand und die Kosten widrig beeinflussen.

Die zweite Ausführungsform der vorliegenden Erfindung umgeht diese Probleme durch die Multiplexier-/ Demultiplexier-Einrichtung 600 im Schaltergerätgehäuse 500 in der Nähe der Schalteinrichtungen 10, 20 und 30.

Die Schaltsteuersignale I werden in der zentralen Steuereinrichtung 800 multiplexiert, über eine Busleitung 700 an die Multiplexier-/ Demultiplexier-Einrichtung 600 im Schaltergerätgehäuse 500 übertragen und dort demultiplexiert und an die entsprechende Schaltereinrichtung 10, 20 bzw. 30 übertragen.

Umgekehrt werden die Statussignale S in der Multiplexier-/ Demultiplexier-Einrichtung 600 im Schaltergerätgehäuse 500 multiplexiert, über die Busleitung 700 an die zentrale Steuereinrichtung 800 übertragen und dort demultiplexiert, woraufhin sie ausgewertet werden und gegebenenfalls geeignete Maßnahmen, z.B. im Falle eines Kurzschlusses, von der zentralen Steuereinrichtung 800 getroffen werden.

Zusätzlich zu den Vorteilen der ersten Ausführungsform ist bei der zweiten Ausführungsform der vorliegenden Erfindung die Anzahl von Kabeln insbesondere dann reduziert, wenn die zentrale Steuereinheit 800 abgelegen von der Schalteranordnung vorgesehen ist.

Die vorliegende Erfindung ist nicht auf die oben beschriebenen beiden Ausführungsformen beschränkt.

Insbesondere ist die Anzahl von Schaltereinrichtungen, die zu einer Schalteranordnung gehören, anwendungsspezifisch anpaßbar. Ebenso können mehrere erfindungsgemäße Schalteranordnungen an verschiedenen Orten im Kraftfahrzeug vorgesehen sein und über Multiplexierer/Demultiplexierer mit einer oder mehreren Steuereinrichtungen verbunden sein.

## Patentansprüche

1. Schalteranordnung für den Einsatz in Bordnetz-Steuergeräten von Kraftfahrzeugen, mit folgenden Merkmalen:
- Eine Leiterschiene (50) ist mit einem ersten vorbestimmten Vorsorgungspotential einer Batterie des Kraftfahrzeugs verbunden,
- eine Mehrzahl von Schaltereinrichtungen (10, 20, 30, 40) ist zum Ein- und Ausschalten mindestens eines zur jeweiligen Schaltereinrichtung zugehörigen Stromverbrauchers (1, 2, 3, 4a, 4b, 4c) vorgesehen,
- jeweils ein erster Stromleitungsanschluß der Schaltereinrichtung (10, 20, 30, 40) ist mit der Leiterschiene (50) verbunden,
- jeweils ein zweiter Stromleistungsanschluß der Schaltereinrichtung (10, 20, 30, 40) ist über den zugehörigen Stromverbraucher (1, 2, 3, 4a, 4b, 4c) mit einem zweiten vorbestimmten Stromversorgungspotential der Batterie verbunden
**dadurch gekennzeichnet**, daß
- die Schaltereinrichtung (10, 20, 30, 40) direkt mit der Leiterschiene verbunden ist,
- die Schaltereinrichtung (10, 20, 30, 40) Leistungs-MOSFETs (101, 201, 301, 401) sowie diese ansteuernde Steuerschaltungen (100, 200, 300, 400) aufweisen, die einerseits auf ein Schaltsteuersignal (I) einer zentralen Steuereinheit ansprechen und andererseits ein vom Stromfluß abhängiges Statussignal (S) erzeugen und dieses der Steuereinheit zur Verfügung stellen, die in Abhängigkeit dieses Steuersignal (S) den Strom durch den zugehörigen Leistungs-MOSFET (101, 201, 301, 401) begrenzt.

2. Schalteranordnung nach Anspruch 1, dadurch gekennzeichnet, dass das erste vorbestimmte Stromversorgungspotential die positive Batteriespannung und das zweite vorbestimmte Stromversorgungspotential die negative Batteriespannung insbesondere das Massepotential, ist.

3. Schalteranordnung nach 1 oder 2, dadurch gekennzeichnet, dass einer Schaltereinrichtung (101, 201, 301, 401) ein einziger Stromverbraucher (1, 2, 3, 4a, 4b, 4c) zugeordnet ist, wenn dessen Stromlast einen vorbestimmten Wert überschreitet.

4. Schalteranordnung nach Anspruch 1, 2 oder 3, dadurch gekennzeichnet, dass einer Schaltereinrichtung (101, 201, 301, 401) mehrere parallel geschaltete Stromverbraucher (1, 2, 3, 4a, 4b, 4c) zugeordnet sind, wenn deren Stromlast einen vorbestimmten Wert nicht überschreitet.

5. Schalteranordnung nach einem der vorhergehenden Ansprüche, dadurch gekennzeichnet, dass eine Multiplexier-/Demultiplexier-Einrichtung (600) zur Verbindung der Steuerschaltungen (10,, 200, 300, 400) der Schaltereinrichtungen (101, 201, 301, 401) mit einer zentralen Steuereinheit (800) vorgesehen ist.

6. Schalteranordnung nach einem der vorhergehenden Ansprüche, dadurch gekennzeichnet, dass die Leiterschiene (50) eine bestimmte Wärmeleitfähigkeit aufweist und mit den Schaltereinrichtungen (101, 201, 301, 401) in einem gemeinsamen Schaltergerätgehäuse (500) enthalten ist.

7. Schalteranordnung nach Anspruch 6, dadurch gekennzeichnet, dass die Steuerschaltungen (100, 200, 300, 400) in dem gemeinsamen Schaltergerätgehäuse (500) enthalten sind.

8. Schalteranordnung nach Anspruch 7, dadurch gekennzeichnet, dass die Multiplexier-/Demultiplexier-Einrichtung (600) in dem gemeinsamen Schaltergerätgehäuse (500) enthalten ist.

9. Schalteranordnung nach einem der vorhergehenden Ansprüche, dadurch gekennzeichnet, dass die Leiterschiene (50) mit bestimmter Wärmeleitfähigkeit und Wärmekapazität direkt an einem Batteriepol angebracht ist.

10. Schalteranordnung nach einem der vorhergehenden Ansprüche, dadurch gekennzeichnet, dass die Leiterschiene (50) mit bestimmter Wärmeleitfähigkeit und Wärmekapazität eine Metallschiene ist.

## Claims

1. Switch arrangement for use in vehicle power supply control units in motor vehicles, having the following features:
- a conductor rail (50) is connected to a first predetermined supply potential of a battery in the motor vehicle,
- a plurality of switch devices (10, 20, 30, 40) is provided for connecting and disconnecting at least one load (1, 2, 3, 4a, 4b, 4c) associated with the respective switch device,
- a respective first power cable connection of the switch device (10, 20, 30, 40) is connected to the conductor rail (50),
- a respective second power cable connection of the switch device (10, 20, 30, 40) is connected to a second predetermined power supply potential of the battery via the associated load (1, 2, 3, 4a, 4b, 4c),
characterized in that
- the switch device (10, 20, 30, 40) is connected directly to the conductor rail,
- the switch device (10, 20, 30, 40) has power MOSFETs (101, 201, 301, 401) and also control circuits (100, 200, 300, 400) which drive said power MOSFETs, respond to a switching control signal (I) from a central control unit, in the first instance, and, in the second instance, produce a status signal (S) which is dependent on the flow of current and make it available to the control unit, which limits the current through the associated power MOSFET (101, 201, 301, 401) on the basis of this control signal (S).

2. Switch arrangement according to Claim 1, characterized in that the first predetermined power supply potential is the positive battery voltage, and the second predetermined power supply potential is the negative battery voltage, in particular earth potential.

3. Switch arrangement according to Claim 1 or 2, characterized in that a switch device (101, 201, 301, 401) has a single associated load (1, 2, 3, 4a, 4b, 4c) if the latter's current load exceeds a predetermined value.

4. Switch arrangement according to Claim 1, 2 or 3, characterized in that a switch device (101, 201, 301, 401) has a plurality of associated loads (1, 2, 3, 4a, 4b, 4c) connected in parallel with one another if the latters' current load does not exceed a predetermined value.

5. Switch arrangement according to one of the preceding claims, characterized in that a multiplexing/demultiplexing device (600) is provided for connecting the control circuits (100, 200, 300, 400) of the switch devices (101, 201, 301, 401) to a central control unit (800).

6. Switch arrangement according to one of the preceding claims, characterized in that the conductor rail (50) has a particular thermal conductivity and is held with the switch devices (101, 201, 301, 401) in a common switch unit housing (500).

7. Switch arrangement according to Claim 6, characterized in that the control circuits (100, 200, 300, 400) are held in the common switch unit housing (500).

8. Switch arrangement according to Claim 7, characterized in that the multiplexing/demultiplexing device (600) is held in the common switch unit housing (500).

9. Switch arrangement according to one of the preceding claims, characterized in that the conductor rail (50) having a particular thermal conductivity and thermal capacity is attached directly to a battery pole.

10. Switch arrangement according to one of the preceding claims, characterized in that the conductor rail (50) having a particular thermal conductivity and thermal capacity is a metal rail.

## Revendications

1. Montage de commutateurs pour l'utilisation dans des appareils de commande de réseau de bord de véhicules automobiles, comportant les caractéristiques suivantes :
- une barre (50) conductrice est reliée à un premier potentiel d'alimentation prédéterminée d'une batterie de véhicule automobile,
- il est prévu une pluralité de dispositifs (10, 20, 30, 40) de commutateurs pour connecter et déconnecter au moins un appareil (1, 2, 3, 4a, 4b, 4c) utilisateur de courant associé au dispositif de commutateurs respectif,
- chaque fois une première borne de ligne de courant du dispositif (10, 20, 30, 40) de commutateurs est reliée au rail (50) conducteur,
- chaque fois une deuxième borne de ligne de courant du dispositif (10, 20, 30, 40) de commutateurs est reliée, par l'intermédiaire de l'appareil (1, 2, 3, 4a, 4b, 4c) utilisateur de courant associé, à un deuxième potentiel d'alimentation en courant prédéterminé de la batterie,
caractérisé en ce que
- le dispositif (10, 20, 30, 40) de commutateurs est relié directement à la barre conductrice,
- le dispositif (10, 20, 30, 40) de commutateurs comporte des MOSFET (101, 201, 301, 401) de puissance ainsi que des circuits (100, 200, 300, 400) de commande qui les commandent, qui d'une part, répondent à un signal (I) de commande de connexion d'une unité de commande centrale et qui produisent d'autre part, un signal (S) d'état dépendant du flux de courant et qui mettent ce signal à disposition de l'unité de commande qui, en fonction de ce signal (S) de commande, limite le courant par le MOSFET (101, 201, 301, 401) de puissance associé.

2. Montage de commutateurs suivant la revendication 1,
caractérisé en ce que le premier potentiel d'alimentation en courant prédéterminé est la tension positive de la batterie et le deuxième potentiel d'alimentation en courant prédéterminé est la tension négative de la batterie, notamment le potentiel de masse.

3. Montage de commutateurs suivant la revendication 1 ou 2,
caractérisé en ce qu'il est associé à un dispositif (101, 201, 301, 401) de commutateurs un seul appareil (1, 2, 3, 4a, 4b, 4c) utilisateur de courant si le courant de charge de celui-ci est supérieur à une valeur prédéterminée.

4. Montage de commutateurs suivant la revendication 1, 2 ou 3,
caractérisé en ce qu'il est associé à un dispositif (101, 201, 301, 401) de commutateurs plusieurs appareils (1, 2, 3, 4a, 4b, 4c) de courant branchés en parallèle si leur courant de charge n'est pas supérieur à une valeur prédéterminée.

5. Montage de commutateurs suivant l'une des revendications précédentes, caractérisé en ce qu'il est prévu un dispositif (600) multiplexeur/démultiplexeur pour relier les circuits (100, 200, 300, 400) de commande des dispositifs (101, 201, 301, 401) de commutateurs à une unité (800) de commande centrale.

6. Montage de commutateurs suivant l'une des revendications précédentes, caractérisé en ce que la barre (50) conductrice a une conductibilité thermique déterminée et est contenue avec les dispositifs (101, 201, 301, 401) de commutateurs dans un boîtier (500) commun d'appareil de commutateurs.

7. Montage de commutateurs suivant la revendication 6,
caractérisé en ce que les circuits (100, 200, 300, 400) de commande sont contenus dans le boîtier (500) d'appareil de commutateurs commun.

8. Montage de commutateurs suivant la revendication 7,
caractérisé en ce que le dispositif (600) multiplexeur/démultiplexeur est contenu dans le boîtier (500) d'appareil de commutateurs commun.

9. Montage de commutateurs suivant l'une des revendications précédentes, caractérisé en ce que la barre (50) conductrice ayant une conductibilité thermique et une capacité thermique déterminées est monté directement sur un pôle de la batterie.

10. Montage de commutateurs suivant l'une des revendications précédentes, caractérisé en ce que la barre (50) conductrice ayant une conductibilité thermique et une capacité thermique déterminées est un rail métallique.
